# EUROPEAN PATENT SPECIFICATION

(11) **EP 3 620 350 B1**
(45) Date of publication and mention of the grant of the patent: **13.07.2022**
(21) Application number: 19194852.0
(22) Date of filing: 02.09.2019
(51) Int. Cl.: B62D 5/00, B62D 15/02

(54) **VEHICLE STEERING WHEEL ASSEMBLY AND VEHICLE**
FAHRZEUGLENKRADANORDNUNG UND FAHRZEUG
ENSEMBLE DE VOLANT DE DIRECTION DE VÉHICULE ET VÉHICULE

(30) Priority: 05.09.2018 CN 201811032330
(43) Date of publication of application: 11.03.2020
(73) Proprietor: Citic Dicastal Co., Ltd., 066011 Quinhuangdao, Heibei (CN)
(72) Inventor: Du, Dexi, Qinhuangdao, Heibei 066011 (CN); Wang, Dadong, Qinhuangdao, Heibei 066011 (CN); Liu, Weidong, Qinhuangdao, Heibei 066011 (CN); Wang, Shaoqian, Qinhuangdao, Heibei 066011 (CN); Xu, Shiwen, Qinhuangdao, Heibei 066011 (CN); Zhu, Zhihua, Qinhuangdao, Heibei 066011 (CN)
(74) Representative: Gong, Jinping

(56) References cited:
- EP-A2- 2 634 064
- WO-A1-03/091081
- DE-A1- 10 157 797
- US-A1- 2003 146 038
- US-A1- 2005 082 107
- US-A1- 2018 029 632

## Description

### TECHNICAL FIELD

The invention relates to a vehicle steering system technology, in particular to a vehicle steering wheel assembly and a vehicle.

### BACKGROUND

With the advancement of technology and the upgrading of users' consumption, the intellectualization of automobiles has become an unstoppable trend. The intellectualization of automobile puts forward new requirements to the steering system of automobile. The steering system of the automobile is used to change the traveling direction of the automobile during the running of the automobile.

In the centuries since the birth of the vehicle, the types of the vehicle steering systems generally include: mechanical steering system, Hydraulic Power Steering System (HPS), Electronic Hydrostatic Power Steering System (EHPS), Electric Power Steering System (EPS) and Steer By Wire System (SBW). Among them, the Steer By Wire System eliminates the mechanical connection between the steering wheel and the turning wheels of the vehicle. Instead, the digital signal transmission is used directly to establish the communication between the steering control component and the steering execution component, and the driving intention can be quickly judged to realize the rapid and flexible steering of the vehicle; at the same time, it has the advantages of small occupied space and reduced damage to the driver when the vehicle collides, which is very suitable for the intelligent requirements of the vehicle. Therefore, the Steer By Wire System has become a research hotspot and future development trend of current vehicle steering systems.

However, in the existing vehicle steering system, the steering wheel assembly has problems such as complicated structure, large space occupation and the like, and cannot meet the intelligent requirements of the vehicle.

DE 101 57 797 A1 relates to a simulator unit for a steering wheel of a vehicle steering system. US 2018/029632 A1 concerns an electric power steering column assembly including a steering shaft and a travel stop assembly. EP 2 634 064 A2 relates to a vehicle steering system includes a rotation restriction mechanism. US 2003/146038 A1 discloses the preamble of the independent claims and relates to a steer-by-wire steering system. US 2005/082107 A1 relates to a steer-by-wire system that includes a driver interface system comprising a steering wheel.

### SUMMARY

In view of this, an object of the present invention is to provide a vehicle steering wheel assembly, as specified in one of claims 1 to 6, and a vehicle, as specified in one of claims 7 to 10, having a simple structure and occupying a small space.

In order to achieve the above object, the technical solution of the present invention is achieved as follows:
A vehicle steering wheel assembly, comprises a steering wheel, a control component, a rotation measuring component for measuring the rotation condition of the steering wheel, and a road sense simulator for applying a resistance torque to the rotation of the steering wheel according to the rotation condition of the steering wheel; a steering column is disposed under the steering wheel, the upper end of the steering column is connected to the steering wheel, and the lower end of the steering column is connected to the road sense simulator, and the road sense simulator is fixed to the vehicle body of the vehicle;
The rotation measuring component and the road sense simulator are both connected to the control component, and the control component controls the road sense simulator to apply the resistance torque to the rotation of the steering wheel according to the measurement data of the rotation measuring component.

The vehicle steering wheel assembly, the road sense simulator comprises a motor, wherein the lower end of the steering column is connected to the output shaft of the motor, and the steering column and the output shaft rotate coaxially;
and the housing of the motor is fixed to the vehicle body of the vehicle, and the output torque of the motor is the resistance torque applied to the rotation of the steering wheel by the road sense simulator.

The vehicle steering wheel assembly, the rotation measuring member is an encoder, and the encoder includes a fixing portion and a measuring portion, wherein the fixing portion is fixed to the upper end of the housing of the motor, and the measuring portion is sleeved on the output shaft.

The road sense simulator further comprises a motor controller, wherein the motor controller is fixed to the housing of the motor, and the motor controller receives a control signal of the control component and controls the output torque of the motor according to the control signal.

The vehicle steering wheel assembly further comprises a steering wheel rotation limiting device, wherein the steering wheel rotation limiting device comprises a first limiting member and a second limiting member; the first limiting member is slidably mounted on the steering column, and the first limiting member is movable along the axial direction of the steering column with the rotation of the steering wheel; the second limiting member is disposed on the steering column, and the upper end and the lower end of the second limiting member are respectively provided with a stopping portion, and the stopping portions are respectively positioned above and below the first limiting member, wherein, after the steering wheel is rotated by a predetermined angle, the first limiting member abuts against the stopping portion of the upper end or the lower end of the second limiting member, and the rotation of the steering wheel is restricted.

The vehicle steering wheel assembly, the first limiting member is a limiting block movable along the axial direction of the steering column, and the second limiting member is a spiral groove with a preset number of circles which is provided on the outer cylindrical surface of the steering column and sets the axis of the steering column as its axis, wherein one end of the limiting block is slidable in the spiral groove, and the start portion and the end portion of the spiral groove are the two stopping portions of the second limiting member; and the steering wheel rotation limiting device further comprises a limiting sleeve, wherein the limiting sleeve is fixed on the vehicle body of the vehicle and is sleeved on the steering column, and the inner wall of the limiting sleeve is provided with a sliding groove for accommodating the axial movement of the other end of the limiting block.

The vehicle comprises a vehicle body and the vehicle steering wheel assembly; the steering column is rotatably mounted to the vehicle body, and the road sense simulator is fixed to the vehicle body; and the control component is an electronic control unit.

The road sense simulator comprises a motor, the lower end of the steering column is connected to the output shaft of the motor, and the steering column and the output shaft rotate coaxially; and the housing of the motor is fixed to the vehicle body, and the output torque of the motor is the resistance torque applied to the rotation of the steering wheel by the road sense simulator.

The rotation measuring member is an encoder, the encoder includes a fixing portion and a measuring portion, the fixing portion is fixed to the upper end of the housing of the motor, and the measuring portion is sleeved on the output shaft.

The steering wheel assembly further comprises a steering wheel rotation limiting device, the steering wheel rotation limiting device comprises a first limiting member and a second limiting member; the first limiting member is slidably mounted on the steering column, and the first limiting member is movable along the axial direction of the steering column with the rotation of the steering wheel; the second limiting member is disposed on the steering column, and the upper end and the lower end of the second limiting member are respectively provided with a stopping portion, and the stopping portions are respectively positioned above and below the first limiting member, wherein, after the steering wheel is rotated by a predetermined angle, the first limiting member abuts against the stopping portion of the upper end or the lower end of the second limiting member, and the rotation of the steering wheel is restricted.

For the vehicle steering wheel assembly and the vehicle of the present invention, the vehicle steering wheel assembly comprises a steering wheel, a control component, a rotation measuring component for measuring the rotation condition of the steering wheel, and a road sense simulator for applying a resistance torque to the rotation of the steering wheel according to the rotation condition of the steering wheel; a steering column is disposed under the steering wheel, wherein the upper end of the steering column is connected to the steering wheel, and the lower end of the steering column is connected to the road sense simulator, and the road sense simulator is fixed to the vehicle body of the vehicle; it can be seen that the vehicle steering wheel assembly and the vehicle of the invention eliminate the mechanical connection structure between the steering mechanisms of the wheels, and the steering control member collects the rotation conditions of the steering wheel to directly control the steering mechanisms of the wheels, so that the steering wheel assembly has simpler structure and occupies less space. Other advantageous effects of the present invention will be further illustrated in the detailed description in conjunction with the specific technical solutions.

### BRIEF DESCRIPTION OF THE DRAWINGS

Fig. 1 is a schematic view of the vehicle steering wheel assembly according to Embodiment 1 of the present invention;
Fig. 2 is a cross-sectional view showing the steering wheel rotation limiting device in the vehicle steering wheel assembly according to Embodiment 1 of the present invention; and
Fig. 3 is a schematic view of the vehicle according to Embodiment 2 of the present invention.

**Description of the reference signs:**

| | | | | |
|---|---|---|---|---|
| | 1 | steering wheel component | 2 | rotation measuring |
| | 3 | road sense simulator | 31 | motor |
| | 32 | motor controller | 4 | control component |
| | 5 | steering column | 6 | vehicle body |
| | 7 | steering wheel rotation limiting device | 71 | first limiting member |
| | 72 | second limiting member | 721, 722 | stopping portion |
| | 73 | limiting sleeve | 731 | sliding groove |

### DETAILED DESCRIPTION OF THE INVENTION

An embodiment of the present invention provides a vehicle steering wheel assembly which comprises a steering wheel, a control component, a rotation measuring component for measuring the rotation condition of the steering wheel, and a road sense simulator for applying a resistance torque to the rotation of the steering wheel according to the rotation condition of the steering wheel; a steering column is disposed under the steering wheel, wherein the upper end of the steering column is connected to the steering wheel, and the lower end of the steering column is connected to the road sense simulator, and the road sense simulator is fixed to the vehicle body of the vehicle; the rotation measuring component and the road sense simulator are both connected to the control component, and the control component controls the road sense simulator to apply the resistance torque to the rotation of the steering wheel according to the measurement data of the rotation measuring component.

The vehicle steering wheel assembly of the embodiment of the invention eliminates the mechanical connection structure between the steering mechanisms of the wheels, and the steering control member collects the rotation conditions of the steering wheel to directly control the steering mechanisms of the wheels, so that the steering wheel assembly has simpler structure and occupies less space.

The detailed technical solution of the present invention will be described in detail with reference to the accompanying drawings and specific embodiments. It should be understood that the accompanying drawings and examples are only used to explain the present invention and are not used to define the present invention.

In order to clearly describe the detailed technical solutions of the embodiments of the present invention, the upper and lower directions described below are the directions in which the vehicle steering wheel assembly of the embodiment of the present invention has been mounted on the vehicle.

### Embodiment 1

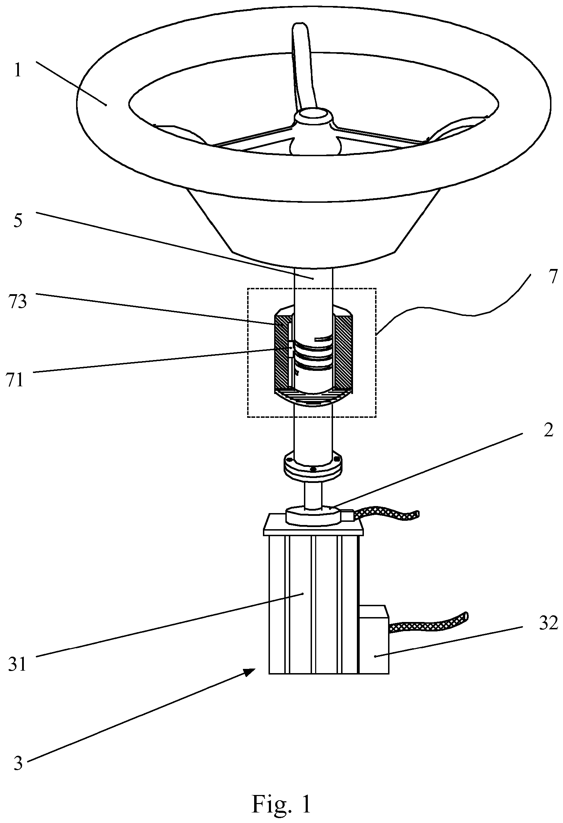

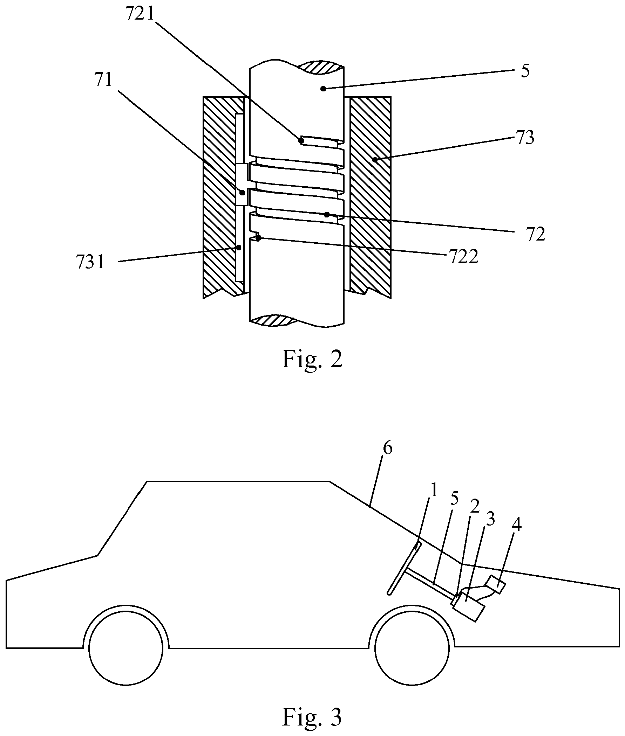

As shown in FIG. 1 and FIG. 3, an embodiment of the present invention provides a vehicle steering wheel assembly which comprises a steering wheel 1, a control component 4, a rotation measuring component 2 for measuring the rotation condition of the steering wheel 1, and a road sense simulator 3 for applying a resistance torque to the rotation of the steering wheel 1 according to the rotation condition of the steering wheel 1. A steering column 5 is disposed under the steering wheel 1, wherein the upper end of the steering column 5 is connected to the steering wheel 1, and the lower end of the steering column 5 is connected to the road sense simulator 3, and the road sense simulator 3 is fixed to the vehicle body 6 of the vehicle.

The rotation measuring component 2 and the road sense simulator 3 are both connected to the control component 4, and the control component 4 controls the road sense simulator 3 to apply the resistance torque to the rotation of the steering wheel 1 according to the measurement data of the rotation measuring component 2.

Here, the measurement data includes the data such as steering, corner, rotation speed and the like.

Specifically, the steering wheel 1 rotates to drive the steering column 5 connected below to rotate, and the rotation measuring component 2 obtains the rotation condition of the steering wheel 1 by measuring the data such as the steering direction, the rotation angle, the rotation speed and the like of the steering column 5, and transmits the rotation condition to the control component 4. The control component 4 sends a steering command to the steering mechanisms of the wheels to perform steering according to the received rotation condition of the steering wheel 1. The vehicle steering system feeds back the actual road sense at the time of steering, such as wheel rotation resistance, to the control component 4. The control component 4 transmits a control signal to the road sense simulator 3 according to the feedback road sense information, and the road sense simulator 3 applies a resistance torque to the rotation of the steering wheel 1 according to the received control signal, so that the vehicle steering wheel assembly of the embodiment of the present invention still has a good and real road sense under the situation without mechanical connections.

Further, in addition to adjust the resistance torque applied to the rotation of the steering wheel 1 by the road sense simulator 3 according to the wheel rotation resistance, the control component 4 can also adjust the resistance torque applied to the rotation of the steering wheel 1 by the road sense simulator 3 according to the speed of the vehicle traveling, that is, the vehicle speed. The steering resistance is generally large when the vehicle speed is slow, and vice versa, the steering resistance is smaller, which is more in line with the user's previous driving experience. In addition, since it is an unsafe driving behavior of too large steering angle when the vehicle speed is high, the control component 4 can accordingly correct the steering angle according to the situation, that is, if the steering angle is too large when the vehicle speed is high, the control component 4 can reduce the steering angle to a safe range. It can be understood that, in addition to the wheel rotation resistance, there are many factors affecting the resistance torque applied to the rotation of the steering wheel 1 by the road sense simulator 3, such as the vehicle speed, the steering acceleration, etc. More information of the vehicle is collected, and it is more accurate to adjust the resistance torque applied to the rotation of the steering wheel 1 by the road sense simulator 3. It is also possible to collect only the rotational resistance of the wheel.

Further, because the road surface condition is similar and the rotational resistance of the wheel is also substantially similar in most cases, the control component 4 can directly control the road sensation simulator 3 to apply a resistance torque to the rotation of the steering wheel 1 according to the received rotation condition of the steering wheel 1, so that the structure can be simplified and the reaction speed of the road sense simulator 3 can be improved.

In the present embodiment, the road sense simulator 3 includes a motor 31 and a motor controller 32. The lower end of the steering column 5 is connected to the output shaft of the motor 31, and the steering column 5 and the output shaft rotate coaxially. The housing of the motor 31 is fixed to the vehicle body 6 of the vehicle, and the output torque of the motor 31 is the resistance torque applied to the rotation of the steering wheel 1 by the road sense simulator 3. The motor controller 32 is fixed to the housing of the motor 31, and the motor controller 32 receives the control signal of the control component 4 and controls the motor 31 to output torque according to the control signal. The resistance torque is outputted by the motor 31, so that the structure is simple, and the control is convenient; it can be understood that the road sense simulator 3 can also be composed of other devices, for example, a hydraulic rotary damper can be included. The motor can be an AC asynchronous motor equipped with an inverter, and more specifically can be a three-phase AC asynchronous motor, which has the advantages of simple structure, reliable operation, low price, strong overload capability, and convenient use, installation and maintenance; and the motor may be a DC brushless motor, but the present invention is not limited thereto.

In addition, in order to prevent the output shaft of the motor 31 from freely rotating, the free rotation of the output shaft of the motor 31 can be restricted through the holding torque of the motor 31 by keeping the motor 31 energized, or the free rotation of the output shaft of the motor 31 can also be restricted by providing a lock device inside the motor 31, but the present invention is not limited thereto.

Preferably, in order to enable the steering column 5 to rotate coaxially with the output shaft, the lower end of the steering column 5 is provided with a flange, and the upper end of the output shaft is also provided with a flange, wherein the flange of the lower end of the steering column 5 is fixedly connected to the flange of the output shaft by screws. It can be understood that the coaxial rotation of the steering column 5 and the output shaft can also be achieved by other means, for example, the steering column 5 and the output shaft can also be integrally formed together, or the steering column 5 and the output shaft are connected by a universal joint.

In the present embodiment, the rotation measuring member 2 is an encoder, and the encoder includes a fixing portion and a measuring portion, wherein the fixing portion is fixed to the upper end of the housing of the motor 31, and the measuring portion is sleeved on the output shaft. The encoder is a common detecting component for measuring angular displacement, and has the advantages of high detection precision, simple implementation, etc. It can be understood that the rotational measuring component 2 may also be other detecting components, such as a rotary potentiometer or the like.

Preferably, the embodiment further integrates the rotation measuring component 2 and the motor 31 to further simplify the structure and reduce the occupied space.

In the present embodiment, the encoder may be a photoelectric encoder. The encoder and the motor controller 32 can be connected to the control component 4 by wire or wirelessly, respectively. It can be understood that the encoder can also be other types of encoders, such as a magneto-electric encoder.

In the present embodiment, the vehicle steering wheel assembly may further comprise a steering wheel rotation limiting device 7. As shown in FIG. 1 and FIG. 2, the steering wheel rotation limiting device 7 comprises a first limiting member 71 and a second limiting member 72. The first limiting member 71 is slidably mounted on the steering column 5, and the first limiting member 71 is movable along the axial direction of the steering column 5 with the rotation of the steering wheel 1.The second limiting member 72 is disposed on the steering column 5, and the upper end and the lower end of the second limiting member 72 are respectively provided with a stopping portion 721 and 722, and the stopping portions 721 and 722 are respectively positioned above and below the first limiting member 71. After the steering wheel 1 is rotated by a predetermined angle, the first limiting member 71 abuts against the stopping portion 721 of the upper end of the second limiting member 72 or the stopping portion 722 of the lower end thereof, and the rotation of the steering wheel 1 is restricted.

In the present embodiment, the first limiting member 71 is a limiting block movable along the axial direction of the steering column 5, and the second limiting member 72 is a spiral groove with a preset number of circles which is provided on the outer cylindrical surface of the steering column 5 and sets the axis of the steering column 5 as its axis, wherein one end of the limiting block is slidable in the spiral groove, and the start portion and the end portion of the spiral groove are the two stopping portions 721 and 722 of the second limiting member 72. The steering wheel rotation limiting device 7 further comprises a limiting sleeve 73, wherein the limiting sleeve 73 is fixed on the vehicle body 6 of the vehicle and is sleeved on the steering column 5, and the inner wall of the limiting sleeve 73 is provided with a sliding groove 731 for accommodating the axial movement of the other end of the limiting block. Here, the spiral groove may be directly machined on the surface of the steering column, or an externally threaded sleeve may be additionally installed.

Specifically, when the vehicle is moving forward, both ends of the limiting block are respectively located in the middle position of the spiral groove and the sliding groove 731. When the vehicle turns to one side, the steering wheel 1 drives the steering column 5 to rotate to the same side, and the spiral groove on the steering column 5 drives one end of the limiting block to move upward or downward along the axial direction of the steering column 5, while the other end of the limiting block moves in the same direction in the sliding groove 731. When the limiting block moves to abut the stopping portion 721 of the upper end of the spiral groove or the stopping portion 722 of the lower end thereof, the steering column 5 is prevented from continuing to rotate, thereby functioning as a limit. The moving direction of the limiting block is determined according to the rotation direction of the spiral groove. For example, in the present embodiment, the left turn (i.e., counterclockwise rotation) of the steering wheel 1 drives the steering column 5 to rotate to the left, and the spiral groove drives the limit block to moved upwards.

In the present embodiment, the shape of the limiting block just like a transverse Chinese character " 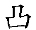 ". The end sliding in the spiral groove is trapezoidal, and the other end sliding in the sliding groove 731 is rectangular, and the limiting block moves in the axial direction of the steering column 5. The height of the trapezoid is smaller than the height of the rectangle, and a step is formed at the junction of the two, so that the left and right positions of the limiting block can be restricted to avoid jamming; it can be understood that other shapes are also possible, such as a wedge shape or a truncated cone shape, and it is also possible to be a rectangular shape or a cylindrical shape, and provide a positioning pin or the like in the middle.

The shape and position of the limiting structure of the steering wheel rotation limiting device 7 are not limited in the embodiment of the present invention. For example, in the present embodiment, the two stopping portions 721 and 722 are respectively disposed at upper and lower ends of the spiral groove, but in other embodiments, the two stopping portions 721, 722 may be respectively disposed at upper and lower ends of the sliding groove 731. In the present embodiment, the spiral groove is disposed on the steering column 5, and the sliding groove 731 is disposed in the limiting sleeve 73, but in other embodiments, the spiral groove may be disposed in the limiting sleeve 73, and the sliding groove 731 is disposed on the steering column 5.

The object of providing the rotation limiting device in the embodiment of the present invention is to avoid the problem that there is no limitation on the rotation angle of the steering wheel due to the elimination of the mechanical structure. If the rotation angle of the steering wheel is too large, so that the rotation angle of the wheel is too large, for example, if the rotation angle of the wheel exceeds 90 degrees, the vehicle will turn in the opposite direction, causing confusion.

In addition, the steering wheel rotation limiting device 7 is disposed along the circumferential direction of the steering column 5. Compared with the gear and pinion limit manner in the prior design, the steering wheel rotation limiting device of the embodiment of the present invention occupies smaller space, thereby further reducing the space occupied by the steering wheel assembly.

### Embodiment 2

As shown in FIG. 3, a vehicle is further provided in an embodiment of the present invention. The vehicle includes a vehicle body 6 and the vehicle steering wheel assembly according to Embodiment 1. The steering column 5 is rotatably mounted to the vehicle body 6, and the road sense simulator 3 is fixed to the vehicle body 6. The control component 4 is an electronic control unit (ECU). ECU is also called "driving computer", "on-board computer", etc., which is a vehicle-specific microcomputer controller for use. Like ordinary computers, the ECU is composed of a microprocessor (CPU), a memory (ROM and RAM), an input/output interface (I/O), an analog-to-digital converter (A/D), and a large-scale integrated circuit such as wave shaping, driver, etc. In this way, it is not necessary to separately provide control components on the vehicle steering wheel assembly, so that the structure is simplified and the cost is saved. It can be understood that the control component 4 can also be an independent control component separately provided on the vehicle steering wheel assembly, rather than an ECU.

The vehicle of the embodiment of the present invention is mainly a four-wheeled vehicle, typically such as a car.

The vehicle of the embodiment of the invention eliminates the mechanically connected steering system, and instead uses the steer-by-wire steering system and the vehicle steering wheel assembly according to Embodiment 1, so that the vehicle is lighter and the structure is simpler, thereby enabling the steering of the vehicle to be faster and more flexible to meet the requirements of vehicle intelligence.

## Claims

1. A vehicle steering wheel assembly, comprising a steering wheel (1), a control component (4), a rotation measuring component (2) for measuring the rotation condition of the steering wheel (1), and a road sense simulator (3) for applying a resistance torque to the rotation of the steering wheel (1) according to the rotation condition of the steering wheel (1); a steering column (5) is disposed under the steering wheel (1), wherein the upper end of the steering column (5) is connected to the steering wheel (1), and the lower end of the steering column (5) is connected to the road sense simulator (3), and the road sense simulator (3) is fixed to the vehicle body (6) of the vehicle;
the rotation measuring component (2) and the road sense simulator (3) are both connected to the control component (4), and the control component (4) controls the road sense simulator (3) to apply the resistance torque to the rotation of the steering wheel (1) according to the measurement data of the rotation measuring component (2), wherein the control component (4) is configured to send a steering command to the steering mechanisms of the wheels to perform steering according to the received rotation condition of the steering wheel (1), **characterized in that** the control component is configured to receive the actual wheel rotation resistance at the time of steering, and wherein the control component (4) is configured to transmit a control signal to the road sense simulator (3) according to the actual wheel rotation resistance, and wherein the road sense simulator (3) is configured to apply a resistance torque to the rotation of the steering wheel (1) according to the received control signal.

2. The vehicle steering wheel assembly according to claim 1, wherein the road sense simulator (3) comprises a motor (31), wherein the lower end of the steering column (5) is connected to the output shaft of the motor (31), and the steering column (5) and the output shaft rotate coaxially; and the housing of the motor (31) is fixed to the vehicle body (6) of the vehicle, and the output torque of the motor (31) is the resistance torque applied to the rotation of the steering wheel (1) by the road sense simulator (3).

3. The vehicle steering wheel assembly according to claim 2, wherein the rotation measuring member is an encoder, and the encoder includes a fixing portion and a measuring portion, wherein the fixing portion is fixed to the upper end of the housing of the motor (31), and the measuring portion is sleeved on the output shaft.

4. The vehicle steering wheel assembly according to claim 2, wherein the road sense simulator (3) further comprises a motor controller (32), wherein the motor controller (32) is fixed to the housing of the motor (31), and the motor controller (32) receives a control signal of the control component (4) and controls the output torque of the motor (31) according to the control signal.

5. The vehicle steering wheel assembly according claim 1, wherein the vehicle steering wheel assembly further comprises a steering wheel rotation limiting device (7), wherein the steering wheel rotation limiting device (7) comprises a first limiting member (71) and a second limiting member (72); the first limiting member (71) is slidably mounted on the steering column (5), and the first limiting member (71) is movable along the axial direction of the steering column (5) with the rotation of the steering wheel (1); the second limiting member (72) is disposed on the steering column (5), and the upper end and the lower end of the second limiting member (72) are respectively provided with a stopping portion, and the stopping portions are respectively positioned above and below the first limiting member (71), wherein, after the steering wheel (1) is rotated by a predetermined angle, the first limiting member (71) abuts against the stopping portion of the upper end or the lower end of the second limiting member (72), and the rotation of the steering wheel (1) is restricted.

6. The vehicle steering wheel assembly according to claim 5, wherein the first limiting member (71) is a limiting block movable along the axial direction of the steering column (5), and the second limiting member (72) is a spiral groove with a preset number of circles which is provided on the outer cylindrical surface of the steering column (5) and sets the axis of the steering column (5) as its axis, wherein one end of the limiting block is slidable in the spiral groove, and the start portion and the end portion of the spiral groove are the two stopping portions of the second limiting member (72); and the steering wheel rotation limiting device (7) further comprises a limiting sleeve (73), wherein the limiting sleeve (73) is fixed on the vehicle body (6) of the vehicle and is sleeved on the steering column (5), and the inner wall of the limiting sleeve (73) is provided with a sliding groove for accommodating the axial movement of the other end of the limiting block.

7. A vehicle is **characterized in that** the vehicle comprises a vehicle body (6) and the vehicle steering wheel assembly of claim 1; the steering column (5) is rotatably mounted to the vehicle body (6), and the road sense simulator (3) is fixed to the vehicle body (6); and the control component (4) is an electronic control unit.

8. The vehicle according to claim 7, wherein the road sense simulator (3) comprises a motor (31), wherein the lower end of the steering column (5) is connected to the output shaft of the motor (31), and the steering column (5) and the output shaft rotate coaxially; and the housing of the motor (31) is fixed to the vehicle body (6), and the output torque of the motor (31) is the resistance torque applied to the rotation of the steering wheel (1) by the road sense simulator (3).

9. The vehicle according to claim 8, wherein the rotation measuring member is an encoder, wherein the encoder includes a fixing portion and a measuring portion, the fixing portion is fixed to the upper end of the housing of the motor (31), and the measuring portion is sleeved on the output shaft.

10. The vehicle of claim 7, wherein the steering wheel assembly further comprises a steering wheel rotation limiting device (7), wherein the steering wheel rotation limiting device (7) comprises a first limiting member (71) and a second limiting member (72); the first limiting member (71) is slidably mounted on the steering column (5), and the first limiting member (71) is movable along the axial direction of the steering column (5) with the rotation of the steering wheel (1); the second limiting member (72) is disposed on the steering column (5), and the upper end and the lower end of the second limiting member (72) are respectively provided with a stopping portion, and the stopping portions are respectively positioned above and below the first limiting member (71), wherein, after the steering wheel (1) is rotated by a predetermined angle, the first limiting member (71) abuts against the stopping portion of the upper end or the lower end of the second limiting member (72), and the rotation of the steering wheel (1) is restricted.

## Patentansprüche

1. Fahrzeuglenkradanordnung, umfassend ein Lenkrad (1), eine Steuerkomponente (4), eine Rotationsmesskomponente (2) zum Messen des Rotationszustands des Lenkrads (1), und einen Straßengefühlsimulator (3) für Aufbringen eines Widerstandsdrehmoments auf die Drehung des Lenkrads (1) gemäß dem Drehzustand des Lenkrads (1); wobei eine Lenksäule (5) unter dem Lenkrad (1) angeordnet ist, wobei das obere Ende der Lenksäule (5) mit dem Lenkrad (1) verbunden ist und das untere Ende der Lenksäule (5) mit dem Straßengefühlsimulator (3) verbunden ist, und der Straßengefühlsimulator (3) an der Fahrzeugkarosserie (6) des Fahrzeugs befestig ist;
wobei die Rotationsmesskomponente (2) und der Straßengefühlsimulator (3) beide mit der Steuerkomponente (4) verbunden sind und die Steuerkomponente (4) den Straßengefühlsimulator (3) steuert, um das Widerstandsdrehmoment auf die Drehung des Lenkrads (1) gemäß den Messdaten der Rotationsmesskomponente (2)aufzubringen, wobei die Steuerkomponente (4) dazu konfiguriert ist, einen Lenkbefehl an die Lenkmechanismen der Räder zu senden, um eine Lenkung gemäß dem empfangenen Rotationszustand des Lenkrads (1) durchzuführen, **dadurch gekennzeichnet, dass** die Steuerkomponente dazu konfiguriert ist, den tatsächlichen Radrotationswiderstand zum Zeitpunkt des Lenkens zu empfangen, und wobei die Steuerkomponente (4) konfiguriert ist, um ein Steuersignal an den Straßengefühlssimulator (3) gemäß dem tatsächlichen Radrotationswiderstand zu übertragen, und wobei der Straßengefühlssimulator (3) ist dazu konfiguriert ist, gemäß dem empfangenen Steuersignal ein Widerstandsdrehmoment auf die Drehung des Lenkrads (1) aufzubringen.

2. Fahrzeuglenkradanordnung nach Anspruch 1, wobei der Straßengefühlsimulator (3) einen Motor (31) umfasst, wobei das untere Ende der Lenksäule (5) mit der Ausgangswelle des Motors (31) verbunden ist, und die Lenksäule (5) und die Abtriebswelle koaxial rotieren; und wobei das Gehäuse des Motors (31) an der Fahrzeugkarosserie (6) des Fahrzeugs befestigt ist, und das Ausgangsdrehmoment des Motors (31) das Widerstandsdrehmoment ist, das auf die Drehung des Lenkrads (1) durch den Straßengefühlsimulator (3) aufgebracht wird.

3. Fahrzeuglenkradanordnung nach Anspruch 2, wobei das Rotationsmesselement ein Codierer ist und der Codierer einen Befestigungsabschnitt und einen Messabschnitt umfasst, wobei der Befestigungsabschnitt an dem oberen Ende des Gehäuses des Motors (31) befestigt ist, und der Messabschnitt auf die Ausgangswelle aufgesteckt ist.

4. Fahrzeuglenkradanordnung nach Anspruch 2, wobei der Straßengefühlsimulator (3) ferner eine Motorsteuerung (32) umfasst, wobei die Motorsteuerung (32) an dem Gehäuse des Motors (31) befestigt ist, und die Motorsteuerung (32) ein Steuersignal der Steuerkomponente (4) empfängt und das Ausgangsdrehmoment des Motors (31) gemäß dem Steuersignal steuert.

5. Fahrzeuglenkradanordnung nach Anspruch 1, wobei die Fahrzeuglenkradanordnung ferner eine Lenkraddrehungsbegrenzungsvorrichtung (7) umfasst, wobei die Lenkraddrehungsbegrenzungsvorrichtung (7) ein erstes Begrenzungselement (71) und ein zweites Begrenzungselement umfasst (72); wobei das erste Begrenzungselement (71) an der Lenksäule (5) verschiebbar angebracht ist und das erste Begrenzungselement (71) entlang der axialen Richtung der Lenksäule (5) mit der Drehung des Lenkrads (1) bewegbar ist; das zweite Begrenzungselement (72) an der Lenksäule (5) angeordnet ist und das obere Ende und das untere Ende des zweiten Begrenzungselements (72) jeweils mit einem Stoppabschnitt versehen sind und die Stoppabschnitte jeweils über und unterhalb des ersten Begrenzungselements (71) positioniert sind, wobei, nachdem das Lenkrad (1) um einen vorbestimmten Winkel gedreht wurde, das erste Begrenzungselement (71) gegen den Stoppabschnitt des oberen Endes oder des unteren Endes des zweiten Begrenzungselements stößt (72) und die Drehung des Lenkrads (1) eingeschränkt wird.

6. Fahrzeuglenkradanordnung nach Anspruch 5, wobei das erste Begrenzungselement (71) ein Begrenzungsblock ist, der entlang der axialen Richtung der Lenksäule (5) bewegbar ist, und das zweite Begrenzungselement (72) eine Spiralnut mit einer voreingestellte Anzahl von Kreisen ist, die auf der zylindrischen Außenfläche der Lenksäule (5) vorgesehen ist und die Achse der Lenksäule (5) als ihre Achse festlegt, wobei ein Ende des Begrenzungsblocks in der Spiralnut verschiebbar ist, und der Anfangsabschnitt und der Endabschnitt der Spiralnut die zwei Stoppabschnitte des zweiten Begrenzungselements (72) sind; und wobei die Lenkraddrehungsbegrenzungsvorrichtung (7) ferner eine Begrenzungshülse (73) umfasst, wobei die Begrenzungshülse (73) an der Fahrzeugkarosserie (6) des Fahrzeugs befestigt ist und auf die Lenksäule (5) aufgesteckt ist, und die Innenwand der Begrenzungshülse (73) mit einer Gleitrille zum Aufnehmen der axialen Bewegung des anderen Endes des Begrenzungsblocks versehen ist.

7. Fahrzeug ist **dadurch gekennzeichnet, dass** das Fahrzeug eine Fahrzeugkarosserie (6) und die Fahrzeuglenkradanordnung nach Anspruch 1 umfasst; wobei die Lenksäule (5) drehbar an der Fahrzeugkarosserie (6) angebracht ist und der Straßengefühlsimulator (3) an der Fahrzeugkarosserie (6) befestigt ist; und wobei die Steuerkomponente (4) eine elektronische Steuereinheit ist.

8. Fahrzeug nach Anspruch 7, wobei der Straßengefühlsimulator (3) einen Motor (31) umfasst, wobei das untere Ende der Lenksäule (5) mit der Ausgangswelle des Motors (31) verbunden ist, und der Lenksäule (5) und Abtriebswelle gleichachsig rotieren; und wobei das Gehäuse des Motors (31) an der Fahrzeugkarosserie (6) befestigt ist, und das Ausgangsdrehmoment des Motors (31) das Widerstandsdrehmoment ist, das auf die Drehung des Lenkrads (1) durch den Straßengefühlsimulator (3) aufgebracht wird.

9. Fahrzeug nach Anspruch 8, wobei das Rotationsmesselement ein Codierer ist, wobei der Codierer einen Befestigungsabschnitt und einen Messabschnitt umfasst, wobei der Befestigungsabschnitt an dem oberen Ende des Gehäuses des Motors (31) befestigt ist, und der Messabschnitt auf die Abtriebswelle aufgesteckt ist.

10. Fahrzeug nach Anspruch 7, wobei die Lenkradanordnung ferner eine Lenkraddrehungsbegrenzungsvorrichtung (7) umfasst, wobei die Lenkraddrehungsbegrenzungsvorrichtung (7) ein erstes Begrenzungselement (71) und ein zweites Begrenzungselement (72) umfasst; wbei das erste Begrenzungselement (71) an der Lenksäule (5) verschiebbar angebracht ist und das erste Begrenzungselement (71) entlang der axialen Richtung der Lenksäule (5) mit der Drehung des Lenkrads (1) bewegbar ist; wobei das zweite Begrenzungselement (72) an der Lenksäule (5) angeordnet ist und das obere Ende und das untere Ende des zweiten Begrenzungselements (72) jeweils mit einem Stoppabschnitt versehen sind und die Stoppabschnitte jeweils über und unterhalb des ersten Begrenzungselements (71) positioniert sind, wobei, nachdem das Lenkrad (1) um einen vorbestimmten Winkel gedreht wurde, das erste Begrenzungselement (71) gegen den Stoppabschnitt des oberen Endes oder des unteren Endes des zweiten Begrenzungselements stößt (72) und die Drehung des Lenkrads (1) eingeschränkt wird.

## Revendications

1. Un ensemble de volant du véhicule, comprenant un volant (1), un composant de commande (4), un composant de mesure de rotation (2) pour mesurer l'état de rotation du volant (1) et un simulateur de détection de route (3) pour appliquer un couple de résistance à la rotation du volant (1) selon l'état de rotation du volant (1); une colonne de direction (5) est disposée sous le volant (1), dans laquelle l'extrémité supérieure de la colonne de direction (5) est reliée au volant (1), et l'extrémité inférieure de la colonne de direction (5) est connectée au simulateur de détection de route (3), et le simulateur de détection de route (3) est fixé à la carrosserie (6) du véhicule;
le composant de mesure de rotation (2) et le simulateur de détection de route (3) sont tous deux connectés au composant de commande (4), et le composant de commande (4) commande le simulateur de détection de route (3) pour appliquer le couple de résistance à la rotation de le volant (1) selon les données de mesure du composant de mesure de rotation (2), dans lequel le composant de commande (4) est configuré pour envoyer une commande de direction aux mécanismes de direction des roues pour exécuter la direction selon la condition de rotation reçue du volant (1), **caractérisé en ce que** le composant de commande est configuré pour recevoir la résistance réelle à la rotation de la roue au moment du braquage, et dans lequel le composant de commande (4) est configuré pour transmettre un signal de commande au simulateur de détection de route (3) en fonction de la résistance réelle à la rotation des roues, et dans lequel le simulateur de détection de route (3) est configuré pour appliquer un couple de résistance à la rotation du volant (1) selon le signal de commande reçu.

2. L'ensemble de volant du véhicule selon la revendication 1, dans lequel le simulateur de détection de route (3) comprend un moteur (31), dans lequel l'extrémité inférieure de la colonne de direction (5) est reliée à l'arbre de sortie du moteur (31), et la colonne de direction (5) et l'arbre de sortie du moteur tournent coaxialement; et le carter du moteur (31) est fixé à la carrosserie (6) du véhicule, et le couple de sortie du moteur (31) est le couple résistant appliqué à la rotation du volant (1) par le simulateur de détection de route (3).

3. L'ensemble de volant du véhicule selon la revendication 2, dans lequel l'élément de mesure de rotation est un codeur, et le codeur comprend une partie de fixation et une partie de mesure, dans laquelle la partie de fixation est fixée à l'extrémité supérieure du carter du moteur (31), et la partie de mesure est emmanché sur l'arbre de sortie.

4. L'ensemble de volant du véhicule selon la revendication 2, dans lequel le simulateur de détection de route (3) comprend en outre un contrôleur de moteur (32), dans lequel le contrôleur de moteur (32) est fixé au carter du moteur (31), et le contrôleur de moteur (32) reçoit un signal de commande du composant de commande (4) et contrôle le couple de sortie du moteur (31) selon le signal de commande.

5. L'ensemble de volant du véhicule selon la revendication 1, dans lequel l'ensemble volant du véhicule comprend en outre un dispositif de limitation de rotation du volant (7), dans lequel le dispositif de limitation de rotation du volant (7) comprend un premier élément de limitation (71) et un deuxième élément de limitation (72); le premier élément de limitation (71) est monté de manière coulissante sur la colonne de direction (5) et le premier élément de limitation (71) est mobile le long de la direction axiale de la colonne de direction (5) avec la rotation du volant (1); le deuxième élément de limitation (72) est disposé sur la colonne de direction (5), et l'extrémité supérieure et l'extrémité inférieure du deuxième élément limite (72) sont respectivement munies d'une partie d'arrêt, et les parties d'arrêt sont respectivement positionnées au-dessus et au-dessous du premier élément de limitation (71), dans lequel, après que le volant (1) est tourné par un angle prédéterminé, le premier élément de limitation (71) vient en butée contre la partie d'arrêt de l'extrémité supérieure ou de l'extrémité inférieure du deuxième élément de limitation (72), et la rotation du volant (1) est limitée.

6. L'ensemble de volant du véhicule selon la revendication 5, dans lequel le premier élément de limitation (71) est un bloc de limitation mobile le long de la direction axiale de la colonne de direction (5), et le deuxième élément de limitation (72) est une rainure en spirale avec un préréglage nombre de cercles qui est prévu sur la surface cylindrique externe de la colonne de direction (5) et régler l'axe de la colonne de direction (5) par rapport à son axe, dans lequel une extrémité du bloc de limitation peut coulisser dans la rainure en spirale, et le partie de départ et la partie terminal de la rainure en spirale sont les deux portions d'arrêt du deuxième élément de limitation (72); et le dispositif de limitation de rotation du volant (7) comprend en outre un manchon de limitation (73), dans lequel le manchon de limitation (73) est fixé sur la carrosserie (6) de véhicule et est emmanché sur la colonne de direction (5), et la paroi interne du manchon de limitation (73) est pourvue d'une rainure de coulissement pour permettre le mouvement axial de l'autre extrémité du bloc de limitation.

7. Un véhicule est **caractérisé en ce que** le véhicule comprend une carrosserie du véhicule (6) et l'ensemble de volant du véhicule selon la revendication 1; la colonne de direction (5) est montée rotative sur la carrosserie du véhicule (6), et le simulateur de détection de route (3) est fixé sur la carrosserie du véhicule (6); et le composant de commande (4) est une unité de commande électronique.

8. Le véhicule selon la revendication 7, dans lequel le simulateur de détection de route (3) comprend un moteur (31), dans lequel l'extrémité inférieure de la colonne de direction (5) est reliée à l'arbre de sortie du moteur (31), et la colonne de direction (5) et l'arbre de sortie tournent coaxialement; et le carter du moteur (31) est fixé à la carrosserie du véhicule (6), et le couple de sortie du moteur (31) est le couple résistant appliqué à la rotation du volant (1) par le simulateur de détection de route (3).

9. Le véhicule selon la revendication 8, dans lequel l'élément de mesure de rotation est un codeur, dans lequel le codeur comprend une partie de fixation et une partie de mesure, la partie de fixation est fixée à l'extrémité supérieure du carter du moteur (31), et la partie de mesure est emmanchée sur l'arbre de sortie.

10. Le véhicule selon la revendication 7, dans lequel l'ensemble de volant comprend en outre un dispositif de limitation de rotation du volant (7), dans lequel le dispositif de limitation de rotation du volant (7) comprend un premier élément de limitation (71) et un deuxième élément de limitation (72); le premier élément de limitation (71) est monté de manière coulissant sur la colonne de direction (5), et le premier élément de limitation (71) est mobile le long de la direction axiale de la colonne de direction (5) avec la rotation du volant (1); le deuxième élément de limitation (72) est disposé sur la colonne de direction (5), et l'extrémité supérieure et l'extrémité inférieure du deuxième élément de limitation (72) sont respectivement pourvues d'une partie d'arrêt, et les parties d'arrêt sont respectivement positionnées au-dessus et sous le premier élément de limitation (71), dans lequel, après que le volant (1) a été tourné d'un angle prédéterminé, le premier élément de limitation (71) vient en butée contre contre la partie d'arrêt de l'extrémité supérieure ou de l'extrémité inférieure du deuxième élément de limitation (72), et la rotation du volant (1) est limitée.
